(19) Europäisches Patentamt
European Patent Office
Office européen des brevets

(11) EP 3 734 420 A1

(12) EUROPEAN PATENT APPLICATION

(43) Date of publication:
04.11.2020 Bulletin 2020/45

(51) Int Cl.:
G06F 3/01 (2006.01)

(21) Application number: 19305551.4

(22) Date of filing: 30.04.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: InterDigital CE Patent Holdings
75017 Paris (FR)

(72) Inventors:
• DANIEAU, Fabien
35576 Cesson-Sévigné (FR)
• LOPEZ, Thomas
35576 Cesson-Sévigné (FR)
• VIAL, Jean-François
35576 Cesson-Sévigné (FR)

(74) Representative: Huchet, Anne
InterDigital CE Patent Holdings
20, rue Rouget de Lisle
92130 Issy-les-Moulineaux (FR)

(54) METHOD FOR USER INTERACTION WITH AN AT LEAST PARTIALLY VIRTUAL ENVIRONMENT, AND CORRESPONDING DEVICE, ELECTRONIC ASSEMBLY, SYSTEM, COMPUTER READABLE PROGRAM PRODUCT AND COMPUTER READABLE STORAGE MEDIUM

(57) The disclosure relates to a method comprising, upon obtaining a first command from a user interface of an electronic device adapted for processing a virtual environment, determining a shift of a current viewing position in the virtual environment by taking account of relative positions of a first part of a human body and a second part of the human body.

It also relates to corresponding device, electronic assembly, system, computer readable program product and storage medium.

Figure 3

EP 3 734 420 A1

**Description**

**1. Technical field**

The present disclosure relates to the technical field of user interaction with an environment being at least partially virtual. Corresponding application, device, electronic assembly, system, computer readable program product and computer readable storage medium are described.

**2. Background art**

More and more graphical software applications and/or games provide users with an at least partially virtual environment incorporating at least one virtual object. It can be an immersive experience for a user in case of Virtual Reality (VR) environment, the user being part of a completely virtual world, or it can be as less immersive experience, when the environment is an Augmented Reality environment (AR) or Mixed Reality (MR) environment (also called Mix Reality environment or Hybrid Reality), incorporating more or less interactive virtual objects to a real-world environment.

However, permitting user exploration of an at least partially virtual environment can lead to some issues, for example regarding its navigation inside the virtual environment.

So, there is need for a solution providing a user with a new way for interacting with an environment being at last partially virtual.

**3. Summary**

The present principles enable at least one of the above disadvantages to be resolved by proposing a method comprising, upon obtaining a first command from a user interface of an electronic device adapted to process a virtual environment, determining a shift of a current viewing position in said virtual environment by taking account of relative positions of a first part of a human body and a second part of said human body.

The method can for example be implemented in the electronic device.

According to another aspect, the present disclosure also concerns an electronic device adapted for processing a virtual environment, said electronic device comprising at least one processor adapted for:

- upon obtaining a first command from a user interface of the electronic device, determining a shift of a current viewing position in said virtual environment by taking account of relative positions of a first part of a human body and a second part of said human body.

**4. List of drawings.**

The present disclosure can be better understood, and other specific features and advantages can emerge upon reading the following description, the description referring to the annexed drawings wherein:

- Figure 1 shows an example of a tracking system according to an example embodiment of the present disclosure;
- Figure 2 illustrates an example functional structure of an electronic device adapted to implement at least some of the embodiments of the method of the present disclosure;
- Figure 3 illustrates the computing of a shift between feet of a user and/or the corresponding movement inside an example virtual scene according to some of the embodiments of the present disclosure;
- Figure 4 illustrates the computing parameters of a shift between feet of a user according to some of the embodiments of the present disclosure;
- Figure 5 gives an overview of some example embodiments of the method of the present disclosure.

It is to be noted that the drawings illustrate example embodiments and that the embodiments of the present disclosure are not limited to the illustrated embodiments. For example, as will be evident to one skilled in the art, embodiments of the present disclosure can also be implemented in at least one other tracking system than the one illustrated by the figures.

**5. Detailed description of the embodiments.**

The present disclosure relates to the technical field of electronic devices, or corresponding applications or methods, adapted to obtain a user command for interacting with an at least partially virtual environment, like navigating inside at least one virtual scene of a VR, MR and/or AR environment. For ease of reading such a scene or environment will be simply referred to hereinafter as a VR environment, or a virtual environment. The virtual environment can be for instance a 1-Dimensional, a 2-Dimensional, or a 3-Dimensional space.

The size of the virtual environment can be very different to the size of the real environment of the user. For instance, the virtual environment can be much larger than the room where the user is located.

A main topic for applications processing a virtual environment is the navigation inside the virtual environment, as a user immersed in the virtual environment has to explore it to progress in its tasks. The metaphor (or interaction technique) used for navigation should remain quite simple and natural for the user.

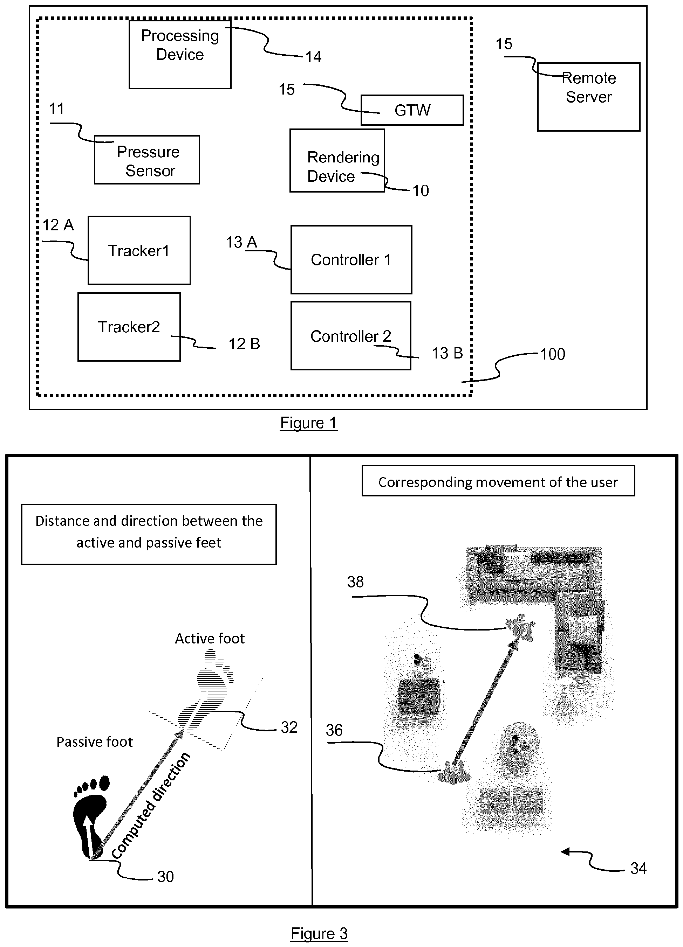

As illustrated by figure 3, at least some embodiments of the present disclosure propose to use a relative location of a first part 30 of a human body, compared to a second part 32 of the human body, to determine a shift to be performed inside the virtual environment 34. More precisely, the shift can be used for computing a destination point 38 inside the virtual environment according to a starting point 36 of the virtual environment. For instance, the starting point can be a current location of a virtual character (like an avatar) or a current viewing location inside the virtual environment. The shift can correspond for instance to a movement to be performed by the virtual character, or to a command to change the current viewing point of the scene to an updated viewing point corresponding to the computed destination point.

By using (at least partially) user gesture(s) as input(s) for interacting with the virtual environment (for instance by navigating inside the virtual environment), at least some embodiments of the present disclosure can help providing a more natural interaction experience at a user point of view, compared to some prior art solutions that only rely on the activation of an auxiliary electronic device, like a controller, that can lower the immersive feeling of a user.

Embodiments using relative user's gesture can help avoiding the use of an auxiliary device, for instance a costly auxiliary device (like an "infinite treadmill" for instance).

Also, embodiments where user gestures are used for some interactions with the virtual environment, while a controller is still used for some other user interactions, can help simplifying the user interface of the controller (by limiting the number of buttons (or input elements) of the controller for instance or the number of buttons involved in a user command) as some interaction (like navigation) does not need to be held by the controller.

The shift can be computed according to relative positions, in terms of distance and/or direction, of the first and second parts of a human body and/or to angles between the first and second parts. The relative positions can be used for instance for computing a movement between a starting point and a destination point in the virtual space while the angle can be used for computing an orientation of view from this destination point. Some embodiments, adapted for example to simple environments only providing some 1D navigation (like a sliding movement on rails), can only rely on a distance between the first and the second part. Some other embodiments, adapted for example to simple environments only providing a 360° view around a fixed position (like, a rotative movement), can only rely on an angle between the first and the second part. According to still other embodiments, the movement can be determined by taking account of the angle, the direction and distance between the first and the second parts of the human body. Such embodiments can be adapted to a navigation inside a 3D environment offering multiple navigation choices to a user, and for example permitting a "free" navigation inside the virtual environment.

Also, by taking account of relative movements of the first and the second part of a user's body, instead of an absolute movement of one part of a human body, at least some embodiment can allow a user not to remain really static and can limit erroneous detections of user command. For instance, when only absolute movements of a head are taken into account as user command, it can be really hard to distinguish if a user head motion corresponds to a real intention to move in the virtual environment or not, which can lead to unwanted displacement in the virtual environment.

Also, as it is intuitive for a user to perceive the relative movements of part of its body (even without seeing its body), at least some embodiments of the present disclosure can be adapted to use cases where the virtual environment is rendered via a headset.

Of course, some parts of a human body would be better adapted to be tracked than others, depending upon the kind of navigation, or the kind of simulated movements, allowed inside the virtual environment, and physiological constraints regarding human body. For instance, the first and/or second part can be chosen in view of a user comfort, or of a limitation of muscular stress, when performing the metaphor (like when using a navigation metaphor).

In some embodiments, the first and/or second part can be part of a body having a certain degree of free movement, one related to the other. For instance, the first and/or the second part can be part of a leg or an arm, like a hand, a foot, an elbow or a knee. In some embodiments, the first and the second part can be similar parts of a human body (like two hands or two knees). In some other embodiments, the first and the second part can be heterogenous parts of a human body (like an knew and a feet). Embodiments where at least one of the first and the second part can be moved independently, or almost independently, of at least one hand can allow a user to move this hand freely while navigating in the virtual environment, for instance to hold a physical object (like a cup of coffee, a tool, a game manual) or to use its hand as another way of interacting with the virtual environment. For instance, such an embodiment can permit a user to interact with the virtual environment thanks to another device (for instance a remote-control device or a controller of the virtual environment).

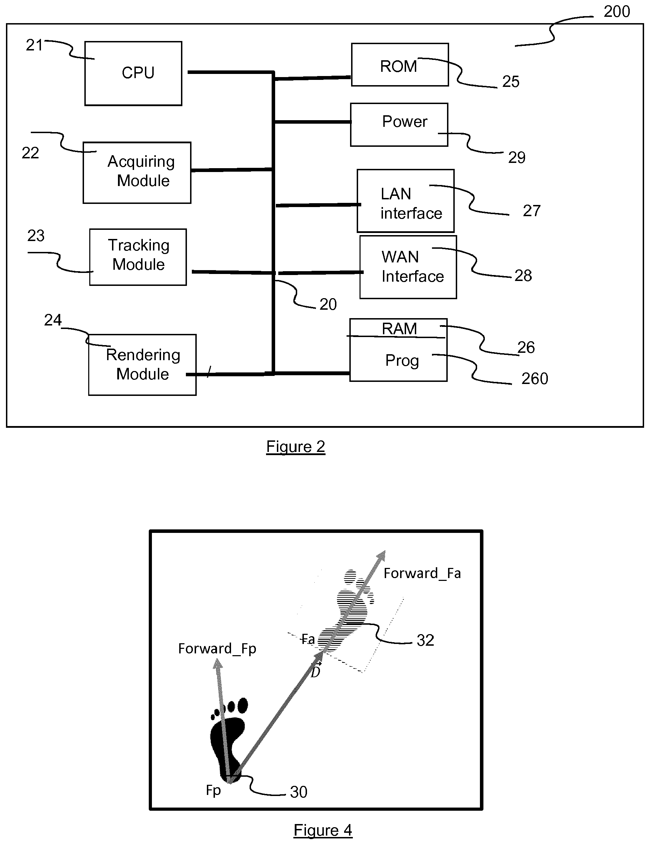

In the example embodiments of figures 3 and 4, the first and second part are the feet of a user interacting with the virtual environment. Indeed, by moving a foot relatively to the other, a user can perform complex movements, like combination of rotational and translation movements. Furthermore, feet can be moved almost independently of the hands, thus keeping both hands available, as explained above, for manipulating virtual objects of the virtual environment for instance.

At least some embodiments where the first and the second parts are feet of a users' body can allow to render in the virtual environment motions that nearly mimics motions of the user in the real world. For instance, a user can have to physically move one foot forward to move forward in the virtual environment or one step aside to move on the side in the virtual environment. Such an embodiment can thus help providing an immersive experience to the user, and/or (at least for some embodiments), result a not tiring and comfortable solution for a user. Using feet of a users' body as the first and the second parts can also allow the user to move in a direction where he/she is not looking at the moment of the movement, for instance moving backward when looking forward.

Figure 1 illustrates a system 100 comprising one or more electronic devices adapted to implement at least one embodiment of the present disclosure.

The system 100 can include at least one electronic device adapted to process a virtual environment, for example one or more rendering device(s) 10 (like at least one Head Mounted Device (HMD), a projector, and/or at least one display), and/or at least one processing device 14 adapted to compute a shift inside the virtual scene. In some embodiments, the processing device can be integrated in the rendering device. The term "processing" is herein to be understood in its larger scope and encompass one or more diverse operation and for example altering a scene, like an at least partially virtual scene, rendered on a display device (like a headset) coupled to the processing device.

The system also comprise means for tracking a position and/or a direction of the first part of the user's body relatively to the second part of the user body. Depending upon embodiments, at least some of the tracking means can be integrated to, coupled (wired or wirelessly) with the processing unit 14 and/or not connected to the processing unit. For instance, in some embodiments, the tracking means can comprise external tracking elements, like Radiofrequency identification (RFID) tags coupled an RFID reader coupled the processing unit 14. In the illustrated embodiment, the tracking means can comprise visual sensors (like depth and/or color camera) and/or visual trackers 12A, 12B adapted to equip the first and/or the second part of the user's body and thus to be representative of a position of the first and second part of the user's body. The trackers can further provide a direction indicator. For instance, each foot of the user can be equipped by at least one positional tracker, in a firmly and reliable coupling, enabling movements of the foot without losing the tracker. Each tracking can comprise a visual marker, representative a given direction (for instance longitudinal direction) of the foot it equips.

The system can comprise means for acquiring a user command, for instance for triggering a computing of the shift. Depending upon embodiments, means for acquiring a user command can comprise different sensors, like a depth and/or color camera, a microphone or wearable sensors connected to the processing device 14. In the example of figure 3 and 4, the means for acquiring a user command comprises at least one pressure sensor 11. Indeed, the pressure detected by a pressure sensor can be used as a user command, when compared to a first pressure value used as an activation threshold, The first pressure value can be adapted to differentiate cases where a user wearing the pressure sensor is simply walking around and cases where the user is voluntary activating the pressure sensor for interacting with the virtual environment (like triggering a computing of a shit) .

In the example illustrated embodiments of figure 3 and 4, the wearable tracker(s) and/or sensor(s) can be integrated in a bracelet or a shoe, for instance, or can comprise adhesive means and can be placed at various places on the feet depending on the embodiments. For more convenience, a pressure sensor can for instance be placed under a user's big toe or a user's heel so that it can be activated without implying a too artificial or unpleasant gesture for the user.

In at least some embodiments, the use of light and/or non-invasive tracking means (like the above trackers and pressure sensors), and/or their location on the user's foot, can help to avoid limiting a mobility of the user.

The system can also comprise at least one controller 13A, 13B permitting a user to manipulate virtual objects of the virtual environment.

In the embodiment of figure 1, the system 100 is located in a domestic environment. Some of the electronic devices of the system can exchange data inside a communication network, for instance a local area network (LAN), using wired communication interfaces (like Ethernet interface) or wireless communication interfaces, like WIFI® or Bluetooth® interfaces.

The system can for example comprise one or several gateway(s) (GTW) 15, giving access to at least one other communication network, like a Wide Area Network (WAN). The WAN can be for example a Broadcast Network or a Broadband Network, like the Internet Network. Thus, at least some of the electronic devices, like the rendering device 10 and/or the processing device 14 of the system 100, can receive and/or transmit data, for example data related to the virtual environment, via the gateway 15 (and via the other communication networks), from/to a remote device, for instance a remote server 16 processing a part of a virtual environment.

Figure 2 describes an example functional structure of an electronic device 200 adapted to implement the method 500 of the present disclosure, that is described later, in at least some of its embodiments. The electronic device can be for instance the rendering device 10 and/or the processing device 14 of the navigation system 100 illustrated by figure 1. It is to be pointed out that the elements, or module, or blocks, of the functional structure illustrated of figure 2 can be implemented using software components and/or using hardware components of the electronic device 200. At least some elements illustrated by figure 2 can comprise both at least one software component and at least one hardware component of the processing device 200. Several of those elements can be part of a same physical apparatus or can belong to different, separate, physical apparatus, depending upon embodiments.

In the example embodiment of figure 2, the electronic device 200 can include different devices (or modules), linked together via a communication bus 20, such as a control, data and address bus, which can also carry a timing signal. For instance, device 200 can include one or several micro-processors 21 (or Central Processing Units (CPU)), a ROM (or « Read Only Memory») 25, a RAM (or « Random Access Memory») 26 and wired and/or wireless communication interface(s) 27, 28, providing access to a LAN and/or WAN Network for instance, at least one of communication interfaces 27, 28 of the electronic device 200 can be adapted to receive and transmit data to the other devices of the domestic environment and/or to remote device, like the remote server 16 of figure 1.

In the example embodiment of figure 2, the electronic device 200 can further comprise (or more generally be coupled to) at least one Input/ Output module 22, 23, 24, (like a module 22 for acquiring a user command, a module 23 for tracking the first and/or the second parts of a human body, a rendering module 24, one or more of a tactile display, a switch, a LED, a button, a microphone, a speaker and so on). The one or more tracking modules and /or acquiring module(s) can comprise respectively at least some of the tracking means and/or the means for acquiring a user command already described in regard to figure 1.

Each of the mentioned memories can include at least one register, that is to say a memory zone of low capacity (a few binary data) or high capacity (with a capability of storage of a whole program or of all or part of data representative of data to be calculated or displayed).

When the electronic device 200 is powered on, via a power supply module 29, for instance a power supply module connected to the power line network, the at least one microprocessor 21 loads the program instructions 260 in a register of the RAM 26, for example the processes needed for performing at least one embodiment of the method 500 described hereinafter and executes the program instructions.

The electronic device 200 of the system can be adapted to implement the method 500 of the present disclosure, in any of its embodiments.

In the example embodiment illustrated in figure 2, the electronic device is adapted for processing a virtual environment and the microprocessor 21 can be configured for, upon obtaining a first command from a user interface of the electronic device, determining a shift of a current viewing position in said virtual environment by taking account of relative positions of a first part of a human body and a second part of said human body.

The structure depicted in link with figure 2 has only an example purpose. It is to be pointed out that the electronic device 200 can further comprise additional capabilities even if illustrated as provided by separate devices. Furthermore, at least some embodiments of the present disclosure can be at least partially implemented in at least one electronic device externally coupled to another device.

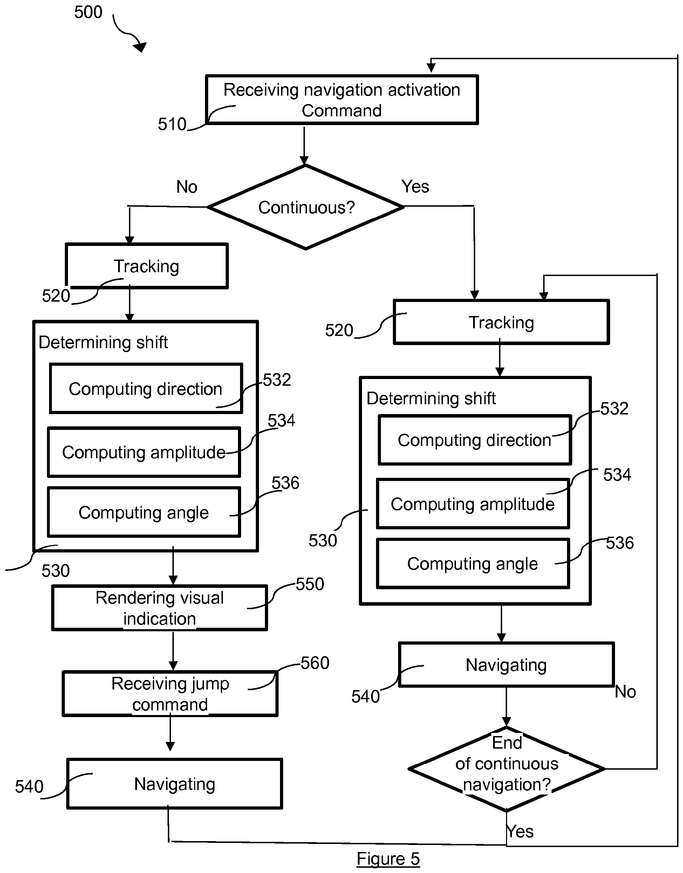

An example embodiment of the method 500 of the present disclosure is detailed hereinafter with regard to figures 3, 4 and 5. **Figure 5** shows an overview of an example embodiment of the method 500 where the method is implemented in a software application executing in the device 200 of figure 2. The software application can be launched at the powering up of the electronic device 200, or at a later stage. As explained above, the method can comprise computing a shift. However, in some embodiments, computing a shift can be performed conditionally. For instance, in the example of figure 5, while a user command for activating the navigation mechanism has not yet been received, the movement of the feet of the user would not trigger a shift inside the virtual environment. Such an embodiment can allow a user to move freely in the physical (real) domestic environment, without causing unwanted movements inside the virtual environment.

As illustrated by figure 5, the method can comprise receiving 510 a user command for activating the navigation mechanism (or metaphor) of the example embodiment of the present disclosure. Depending upon embodiments, the command can be diverse. For instance, it can be a voice command, a command entered via a keyboard, an action on a button of a controller, a user gesture captured via tracking means and/or via acquiring means coupled to the electronic device, like the at least one pressure sensor already introduced.

Depending upon embodiments, several kinds of navigation can be performed once the navigation mechanism is activated. For instance, in the example embodiments of figure 5, a continuous navigation and a discrete navigation can be done. Continuous navigation can correspond for example to a simulation of an avatar walking or running in the virtual environment, while discrete navigation can correspond for example to a teleporting, or jump, of an avatar from a starting point to a destination point of the virtual environment.

Providing a user with a possibility to teleport (by performing a jump, for instance a long jump) inside the virtual environment can help avoiding repetitive movements of a user, and thus movements that may be tiring for a user.

At least some embodiments of the present disclosure can thus be adapted to virtual environment of different sizes, continuous navigation being used for instance for small virtual environment (or more generally when little navigation can be performed inside the virtual environment) and teleportation being used for larger virtual environment (or more generally when much navigation can be performed inside the virtual environment).

In some embodiments allowing both kinds of navigation, the kind of navigation to be performed can be chosen in response to a user request, for instance a user gesture captured by the pressure sensor of the electronic device 200 or a user input through a controller. In some embodiments allowing both kinds of navigation, the kind of navigation to be performed can be chosen automatically, without receiving indication of a requested kind of navigation through a user request, depending for instance on a location inside the virtual environment of the avatar that a user wants to move. For instance, when an avatar is facing a window, or a ravine, discrete navigation can be automatically chosen by the application when the direction of the shift corresponds to a forward movement

In some embodiments, the user command for activating navigation can be different for requesting a navigation in "continuous" mode and for requesting a navigation in "discrete" mode for instance. In some other embodiments, the user activation command for requesting a navigation can result in a default kind of navigation (for instance the discrete navigation mode), the selecting of a specific kind of navigation being done via another user command.

In the continuous navigation mode, once the user activation command has been received, all detected movements of the first and/or second body parts (e.g. the feet in the exemplary embodiments of figure 5) are considered as navigation commands and thus multiple movements of the first and/or second body parts lead to multiple, successive, shifts and thus to multiple, successive, movements inside the virtual word, the destination point of a shift becoming the starting point of the following shift. In some embodiments, the method can comprise rendering a visual indication regarding the successive shifts (like an avatar walking through the successive destination points).

In some embodiments, the continuous navigation can end only upon receiving a user request (like a request for de-activating navigation inside the virtual environment or a request for switching to discrete navigation) . In other embodiments, the navigation can end after a given duration, or when a given distance has been walked through inside the virtual environment, or because of at least one other event occurring in the virtual environment (for instance when the end of a level is reached in a game) .

In the discrete navigation mode, a movement in the virtual environment is performed only once a user "jump" request has been received (560) (for instance via the pressure sensors). Thus, in the discrete navigation mode, the current position inside the virtual environment stays unchanged until the user jump request is received. In some embodiments, in the discrete navigation mode, the shift can be determined upon receiving the user "jump" request. In other embodiments, as illustrated by figure 5, in the discrete navigation mode, while the navigation is performed only when receiving 560 the jump request, the method can however comprise determining 530 a current (estimated) shift, before receiving the jump request. The current shift can be determined according to current feet positions in the real word. The method can comprise rendering 550 a visual indication regarding an estimated destination point inside the virtual word, taking account of the current (unchanged) starting point in the virtual word and the currently determined shift. Such a visual indication can help a user to anticipate the result navigation and to decide when to perform the jump request (thus triggering the effective jump in the virtual environment).

In the discrete and in the continuous navigation modes, the method can comprise tracking 520 the user's feet relative positions. In the example illustrated embodiment, each foot of a user is equipped with a positional tracker and the method can comprise tracking 520 the trackers equipping the user's feet and obtaining their respective positions, considered as the positions of the user's feet positions. Depending upon embodiments, the tracking can be performed as soon as the application is launched or only upon receiving a user command. The user command can be a command for activating navigation, a command for being in the continuous or discrete navigation mode, and/or a jump command in discrete navigation mode.

Once a user command has been received, and the feet positions have been obtained, the method can comprise determining 530 a shift in the virtual environment. In the embodiments of figures 3 and 4, each user's foot is equipped with a pressure sensor. When one of the two pressure sensors is activated by a user (for instance for a user command as explained above), the two feet of the users can be distinguished: the foot equipped with the pressed sensor is considered as active, while the other foot of the user (where the sensor was not pressed) is considered as passive. In the example embodiment of figure 5, the position Fp of the passive foot is used as corresponding to the current viewpoint in the virtual environment. The position Fa of the active foot, relatively to Fp, is used for determining 530 a shift in the virtual environment, compared to the current viewpoint. In other words, Fp corresponds to the starting point (or in other words the origin) of the shift and Fa is used for computing a shift to a destination point in the virtual world, compared to the starting point Fp. Determining a shift can comprise computing 532 a direction $\vec{D}$ (like a normalized direction) of the shift inside the virtual environment and computing 534 an amplitude A of the shift. In the example embodiment of figure 5, using the positions given by the positional trackers, the normalized direction $\vec{D}$ and the amplitude $A$ can be computed as follows:

$$A = \left\| F_a - F_p \right\|$$

$$\vec{D} = \frac{F_a - F_p}{A}$$

The direction $\vec{D}$ corresponds for instance to the direction in which an avatar will move (in case of continuous navigation) or teleport (in case of discrete navigation) while the amplitude A determines from how fast the avatar will walk (in case of continuous navigation) or how far it will teleport (in case of discrete navigation). In some embodiments, the computed amplitude in the virtual environment can be between linearly transposed from the distance between the first and the second parts in the real environment, or it can be obtained by using other transfer function (like an exponential transfer function for instance to easily access farther places or a logarithmic transfer function in case of very small virtual environment).

Moreover, the method can comprise computing 536 an angle $\theta$ corresponding to a change in the orientation of the view point inside the virtual environment. The user is thus able to turn while walking (continuous) or face a new direction after a teleportation (discrete). The angle $\theta$ corresponds to a rotational movement between the orientation of the current view point, (corresponding to the orientation of the passive foot Fp in the example of figure 5), and the orientation of view at the destination point given by the shift in the virtual environment. For instance, in the example of figure 5, the angle can be computed by:

$$\theta = Angle\left(Forward_{F_p}, Forward_{F_a}\right)$$

Where $Forward_{F_p}$ and $Forward_{F_a}$ are vectors having a direction corresponding respectively to the longitudinal axe of foot $F_p$ and the longitudinal axe of foot $F_a$ and are oriented toward the end of the feet. In case of first and/or second hand being a hand, the longitudinal axe can correspond to the axe defined by the wrist and of the middle finger of the hand.

Of course, in other embodiments, the angle in the virtual environment can be computed from the angle between the first and the second parts by using other transfer function.

The method can comprise navigating 540 in the virtual environment according the determined shift, considered for instance as a desire movement of the user inside the virtual environment.

It is to be pointed out that depending upon embodiments, the passive foot and the active foot can vary upon the time (according to the activated sensor for instance as explained above) or can stay the same upon the time, once a sensor has been activated a first time, or because only one of the feet of the user is equipped with a sensor.

The present disclosure has been described in relation with an example system comprising head mounted device(s). Of course, as it can be understandable by a person skilled in the art, the present disclosure can also be applied to a system providing a user with a different immersive experience, like a Cave Automatic Virtual Environment (CAVE). In such a case, the system can include projectors for a rendering the virtual environment on walls of at least one room of the domestic environment.

Also, some embodiments of the present disclosure can also use other tracking devices than the ones cited in the present disclosure, or other communication protocols.

As can be appreciated by one skilled in the art, aspects of the present principles can be embodied as a system, device, method, signal or computer readable product or medium.

For example, the present disclosure relates to a method, implemented in an electronic device, the method comprising, upon obtaining a first command from a user interface of an electronic device adapted to process a virtual environment, determining a shift of a current viewing position in the virtual environment by taking account of relative positions of a first part of a human body and a second part of the human body.

According to at least some embodiments of the present disclosure, the determined shift of the current viewing position in the virtual environment corresponds to a shift from a starting point of a geometrical space associated with the current viewing position.

According to at least some embodiments of the present disclosure, determining the shift takes account of relative orientations of the first and second parts of the human body.

According to at least some embodiments of the present disclosure, the method comprises obtaining a position and/or an orientation of view, in the virtual environment by taking account of the determined shift.

According to at least some embodiments of the present disclosure, the obtained position is a position associated to a destination point of the geometrical space computed by applying the determined shift from the starting point.

According to at least some embodiments of the present disclosure, the method comprises rendering an indication representative of the obtained position and/or the obtained orientation of view.

According to at least some embodiments of the present disclosure, the method comprises shifting the current viewing position in the virtual environment according to the obtained position and/or the obtained orientation of view.

According to at least some embodiments of the present disclosure, the shifting is performed upon obtaining a second command from a user interface of the electronic device.

According to at least some embodiments of the present disclosure, the method comprises rendering the shifting as a discrete navigation inside the virtual environment.

According to at least some embodiments of the present disclosure, the determining and the shifting are performed iteratively until a third command is obtained from a user interface of the electronic device.

According to at least some embodiments of the present disclosure, the method comprises rendering the shifting as a continuous navigation inside the virtual environment.

According to at least some embodiments of the present disclosure, the method comprises tracking the positions and/or the orientations of the first and/or second part of the human body.

According to at least some embodiments of the present disclosure, the first, second and/or third command is acquired at least partially via at least one sensor coupled to the electronic device.

According to at least some embodiments of the present disclosure, the at least one sensor belongs to a group comprising :

- a pressure sensor;
- a motion sensor;
- a combination thereof.

According to at least some embodiments of the present disclosure, the at least one sensor comprises a wearable sensor equipping the first and/or second part.

According to at least some embodiments of the present disclosure, the first and/or second part of the human body belongs to a group comprising :

- a hand ;
- a foot;
- an elbow ;
- a knew;
- a combination thereof.

According to another aspect, the present disclosure relates to an electronic device adapted for processing a virtual environment, the electronic device comprising at least one processor, or at least one processing circuitry, being adapted for :

- upon obtaining a first command from a user interface of the electronic device, determining a shift of a current viewing position in the virtual environment by taking account of relative positions of a first part of a human body and a second part of the human body.

While not explicitly described, the above electronic device of the present disclosure can be adapted to perform the above method of the present disclosure in any of its embodiments.

According to another aspect, the present disclosure relates to a system comprising a first electronic device comprising at least one processor adapted for processing a virtual environment rendered by a second electronic device of the system, the at least one processor being adapted, upon obtaining a first command from a user interface of the first electronic device, determining a shift of a current viewing position in the virtual environment by taking account of relative positions of a first part of a human body and a second part of the human body.

While not explicitly described, the present embodiments related to the method or to the corresponding electronic device or communication system can be employed in any combination or sub-combination.

According to another aspect, the present disclosure relates to a non-transitory computer readable program product comprising program code instructions for performing, when the non-transitory software program is executed by a computer, the method of the present disclosure, in any of its embodiments.

For example, at least one embodiment of the present disclosure relates to a non-transitory computer readable program product comprising program code instructions for performing, when the non-transitory software program is executed by a computing unit of an electronic device adapted to process a virtual environment, a method comprising, upon obtaining a first command from a user interface of said electronic device, determining a shift of a current viewing position in the virtual environment by taking account of relative positions of a first part of a human body and a second part of the human body.

According to another aspect, the present disclosure relates to a computer readable storage medium carrying a software program comprising program code instructions for performing, when the non-transitory software program is executed by a computer, the method of the present disclosure, in any of its embodiments.

According to an embodiment of the present disclosure, the computer readable storage medium tangibly embodies a program of instructions executable by a computing unit of an electronic device adapted to process a virtual environment, a method comprising, upon obtaining a first command from a user interface of said electronic device, a method comprising, upon obtaining a first command from a user interface of the electronic device, determining a shift of a current viewing position in the virtual environment by taking account of relative positions of a first part of a human body and a second part of the human body.

As can be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium may be utilized.

A computer readable storage medium can take the form of a computer readable program product embodied in one or more computer readable medium and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether such computer or processor is explicitly shown.

It is also to be pointed out that the at least some of embodiments can be combined together, even if not explicitly disclosed above.

**Claims**

1.  An electronic device adapted for processing a virtual environment, said electronic devic comprising at least one processor adapted for, upon obtaining a first command from a user interface of the electronic device, determining a shift of a current viewing position in said virtual environment by taking account of relative positions of a first part of a human body and a second part of said human body.

2.  A method comprising, upon obtaining a first command from a user interface of an electronic device adapted to process a virtual environment, determining a shift of a current viewing position in said virtual environment by taking account of relative positions of a first part of a human body and a second part of said human body.

3.  The electronic device of claim 1, the at least one processor being adapted for, or the method of claim 2 wherein determining said shift takes account of relative orientations of said first and second parts of said human body.

4.  The electronic device of claim 1 or 3, the at least one processor being adapted for, or the method of claim 2 or 3 comprising obtaining a position and/or an orientation of view, in said virtual environment by taking account of said determined shift.

5.  The electronic device of claim 4, the at least one processor being adapted for, or the method of claim 4 comprising rendering an indication representative of said obtained position and/or said obtained orientation of view.

6.  The electronic device of any of claims 3 to 5, the at least one processor being adapted for, or the method of any of claims 3 to 5 comprising shifting the current viewing position in said virtual environment according to said obtained position and/or said obtained orientation of view.

7.  The electronic device or the method of claim 6 wherein said shifting is performed upon obtaining a second command from a user interface of said electronic device.

8.  The electronic device or the method of claim 6 wherein said determining and said shifting are performed iteratively until a third command is obtained from a user interface of said electronic device.

9.  The electronic device of any of claims 1 or 3 to 8 or the method of any of claims 2 to 8 wherein said first, second and/or third command is acquired at least partially via at least one sensor coupled to said electronic device.

10. The electronic device or the method of claim 9 wherein the at least one sensor belongs to a group comprising :

    - a pressure sensor;
    - a motion sensor;
    - a combination thereof.

11. The electronic device or the method of claim 9 or 10 wherein said at least one sensor comprises a wearable sensor equipping said first and/or second part of said human body.

12. The electronic device of any of claims 1 or 3 to 11 or the method of any of claims 2 to 11 wherein the first and/or second part of said human body belongs to a group comprising :

    - a hand;
    - a foot;
    - an elbow;
    - a knew;
    - a combination thereof.

13. System comprising a first electronic device comprising at least one processor adapted for processing a virtual environment rendered by a second electronic device of said system, said at least one processor being adapted, upon obtaining a first command from a user interface of the first electronic device, determining a shift of a current viewing position in said virtual environment by taking account of relative positions of a first part of a human body and a second part of said human body.

14. Non-transitory computer readable program product comprising program code instructions for performing, when the non-transitory readable program product is executed by a computing unit of an electronic device adapted to process a virtual environment, a method comprising, upon obtaining a first command from a user interface of said electronic device, determining a shift of a current viewing position in said virtual environment by taking account of relative positions of a first part of a human body and a second part of said human body.

15. Non- transitory computer readable storage medium carrying a software program comprising program code instructions executable by a computer for performing, when the software program is executed by a computing unit of an electronic device adapted to process a virtual environment, at least one method comprising, upon obtaining a first command from a user interface of said electronic device, determining a shift of a current viewing position in said virtual environment by taking account of relative positions of a first part of a human body and a second part of said human body.

EP 3 734 420 A1

Figure 1

Figure 3

11

Figure 2

Figure 4

500

Receiving navigation activation
Command

510

No — Continuous? — Yes

Tracking
520

Determining shift

Computing direction — 532

Computing amplitude — 534

Computing angle — 536

530

Rendering visual indication — 550

Receiving jump command — 560

540 — Navigating

Tracking — 520

Determining shift

Computing direction — 532

Computing amplitude — 534

Computing angle — 536

530

Navigating — No

540

End of continuous navigation?

Yes

Figure 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/003915 A1 (TEMPLEMAN JAMES N [US]) 4 January 2007 (2007-01-04) * abstract; figures 1-3 * | 1-7,9-15 | INV. G06F3/01 |
| Y | * paragraphs [0025], [0027] - [0041], [0073] - [0076], [0079] - [0082] * | 8 | |
| X | KR 2011 0044391 A (SAMSUNG ELECTRONICS CO LTD [KR]) 29 April 2011 (2011-04-29) * abstract; figures 1-18 * * paragraphs [0016], [0076], [0087] - [0089] * | 1,2,4-7, 9,12-15 | |
| X | US 2015/352441 A1 (LIN CHIH-FENG [TW]) 10 December 2015 (2015-12-10) * abstract; figures 1-22 * * paragraphs [0010], [0011], [0026], [0034] - [0055] * | 1-7, 12-15 | |
| Y | WO 2012/122655 A1 (SID LEE PARIS S A R L SOC [FR]; SID LEE INC [CA]; BRUN DIDIER [FR]) 20 September 2012 (2012-09-20) * abstract; figures 1a-8 * | 8 | TECHNICAL FIELDS SEARCHED (IPC) |
| A | * paragraphs [0024], [0053], [0056] * | 1,2, 13-15 | G06F |
| A | US 2018/364808 A1 (PAHUD MICHEL [US] ET AL) 20 December 2018 (2018-12-20) * abstract; figures 1-8 * * paragraphs [0068] - [0069] * | 5 | |

The present search report has been drawn up for all claims

| Place of search | Date of completion of the search | Examiner |
|---|---|---|
| Munich | 15 October 2019 | Köhn, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 19 30 5551

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2019

| Patent document cited in search report | | Publication date | Patent family member(s) | | Publication date |
|---|---|---|---|---|---|
| US 2007003915 | A1 | 04-01-2007 | US 2007003915 A1<br>WO 2006020846 A2 | | 04-01-2007<br>23-02-2006 |
| KR 20110044391 | A | 29-04-2011 | NONE | | |
| US 2015352441 | A1 | 10-12-2015 | NONE | | |
| WO 2012122655 | A1 | 20-09-2012 | NONE | | |
| US 2018364808 | A1 | 20-12-2018 | US 2018364808 A1<br>WO 2018231457 A1 | | 20-12-2018<br>20-12-2018 |

EPO FORM P0459

For more details about this annex : see Official Journal of the European Patent Office, No. 12/82